(19) **Europäisches Patentamt / European Patent Office / Office européen des brevets**

(11) **EP 4 772 350 A1**

(12) **EUROPEAN PATENT APPLICATION**
published in accordance with Art. 153(4) EPC

(43) Date of publication:
08.07.2026 Bulletin 2026/28

(21) Application number: 24859103.4

(22) Date of filing: 18.06.2024

(51) International Patent Classification (IPC):
*B41J 2/165* (2006.01)   *C09D 9/00* (2006.01)
*C11D 7/26* (2006.01)   *C11D 7/50* (2006.01)

(52) Cooperative Patent Classification (CPC):
B41J 2/165; C09D 9/00; C09D 11/30; C11D 7/26;
C11D 7/34; C11D 7/50

(86) International application number:
PCT/JP2024/021965

(87) International publication number:
WO 2025/047057 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.08.2023 JP 2023138672

(71) Applicant: Kao Corporation
Tokyo 103-8210 (JP)

(72) Inventors:
• FUKUDA, Teruyuki
Tokyo 103-8210 (JP)

• TAMURA, Yuichi
Tokyo 103-8210 (JP)
• TANAKA, Satoshi
Tokyo 103-8210 (JP)
• NAKANISHI, Ryo
Tokyo 103-8210 (JP)
• NAKAMURA, Fumihiko
Tokyo 103-8210 (JP)

(74) Representative: Hoffmann Eitle
Patent- und Rechtsanwälte PartmbB
Arabellastraße 30
81925 München (DE)

(54) **INKJET HEAD CLEANING COMPOSITION**

(57) The present invention relates to: (i) an inkjet head cleaning composition containing a solvent (A) and water, in which the solvent (A) has a dipole moment of 5.0 D or more at 25°C, as determined by a density functional theory, and the water content is 30% by mass or more; (ii) use of a cleaning composition containing a solvent (A) and water as an inkjet head cleaning agent, in which the solvent (A) has a dipole moment of 5.0 D or more at 25°C, as determined by a density functional theory, and the water content is 30% by mass or more; and (iii) a method for cleaning an inkjet head by using a cleaning composition containing a solvent (A) and water, in which the solvent (A) has a dipole moment of 5.0 D or more at 25°C, as determined by a density functional theory, and the water content is 30% by mass or more.

EP 4 772 350 A1

**Description**

Technical Field

The present invention relates to an inkjet head cleaning composition.

Background Art

Cleaning compositions are widely used with various ingredients adjusted in view of the cleaning effectiveness and the required characteristics based on, e.g., the type of the object to be cleaned, the form of the composition, and the method of use. Among the targets for such cleaning compositions are articles using a pigment dispersion.

The pigment dispersion is composed of pigments having various functionalities and a medium in which the pigments are dispersed. The pigment dispersion is formed by mixing solid pigments with a liquid medium, and usually contains a polymer to disperse the pigments in the medium. The pigment dispersion may also contain polymers other than the polymer for dispersing the pigments in order to add various properties. Therefore, even if the pigment dispersion seems stable right after production, the dispersion state of the pigments can irreversibly change over time or when exposed to heat, leading to pigment settling, pigment aggregation, pigment adsorption onto a member to which the pigment dispersion has adhered, pigment drying, or pigment sticking due to the presence of the above polymers. These irreversible changes in the dispersion state may be put to good use as functions of the pigment dispersion, but often bring about side effects that would not be intended by the designer of the pigment dispersion. As a result, there are many examples where such side effects cause losses in industrial applications.

One of the examples is ink for inkjet recording. When the ink for inkjet recording is left standing, the ink components aggregate at a discharge nozzle, so that the solid matter adheres to the vicinity of the discharge nozzle. The adhesion of the solid matter is responsible for not only ejection defects such as ejection deviation, but also nozzle clogging if it remains unattended. Thus, an expensive inkjet head may be forced into replacement.

The ink components aggregate for various reasons, including settling of a pigment with a high specific gravity and an increase in ink concentration as the ink medium dries out. Considering the use of the ink for inkjet recording in a variety of industrial fields, the adhesion of ink solids near the discharge nozzle and the nozzle clogging can reduce the production speed and increase the running cost of printing machines. This is one of the obstacles to the spread of the ink for inkjet recording.

To address these problems, plenty of research has been done on cleaning solutions for inkjet heads.

For example, JP 2018-104637 A (Patent Document 1) aims to provide a water-based ink cleaning solution excellent in cleaning water-based ink that contains a pigment and a water-insoluble polymer, and a method for cleaning water-based ink using the cleaning solution. Patent Document 1 discloses a water-based ink cleaning solution that contains a surfactant, a water-soluble organic solvent containing diethylene glycol monoisopropyl ether, and water. The surfactant contains at least one compound selected from the group consisting of an acetylene glycol or an ethylene oxide adduct of the acetylene glycol, polyethylene glycol alkyl ether containing an alkyl group having 8 or more carbon atoms, and polyethylene glycol aryl ether containing an aryl group having 6 or more carbon atoms. The content of the water-soluble organic solvent in the cleaning solution is within a predetermined range. Patent Document 1 also discloses a method for cleaning water-based ink using the cleaning solution.

Disclosure of the Invention

The present invention relates to an inkjet head cleaning composition containing a solvent (A) and water. The solvent (A) has a dipole moment of 5.0 D or more at 25°C, which is determined by a density functional theory. A content of the water in the inkjet head cleaning composition is 30% by mass or more.

Description of the Invention

The technology of Patent Document 1 uses the cleaning solution containing a surfactant and an amphipathic organic solvent and attempts to enhance the capability of the cleaning solution to clean ink in an inkjet head. However, in this technology, there is a trade-off between the ink cleaning capability and the durability of components of the inkjet head. The durability of components of the inkjet head means that the components such as adhesives and packings of the inkjet head are deformed due to, e.g., swelling or dissolution by the action of the surfactant and the amphipathic organic solvent. This can cause the shape of the inkjet head to become distorted or the components to peel off Using the cleaning solution that compromises the durability of components of the inkjet head may render the inkjet head unusable in a much shorter period than expected. Therefore, the cleaning solution needs to be highly effective in cleaning ink-derived coatings attached to the components of the inkjet head as well as highly compatible with the components.

The present invention provides a cleaning composition that exhibits excellent cleaning performance on coatings and thus improves the ejection recovery of an inkjet head, and also has excellent compatibility with components of the inkjet head.

The present inventors found that the above problems would be solved by providing an inkjet head cleaning composition containing a solvent and water, in which the solvent has a dipole moment of 5.0 D or more at 25°C, as determined by a density functional theory, and the content of the water in the inkjet head cleaning composition is 30% by mass or more.

The present invention provides an inkjet head cleaning composition containing a solvent (A) and water. The solvent (A) has a dipole moment of 5.0 D or more at 25°C, which is determined by a density functional theory. The content of the water in the inkjet head cleaning composition is 30% by mass or more.

[Cleaning composition]

A cleaning composition of the present invention contains a solvent (A) and water. The solvent (A) has a dipole moment of 5.0 D or more at 25°C, which is determined by a density functional theory. The content of the water in the cleaning composition is 30% by mass or more.

The cleaning composition of the present invention is preferably an inkjet head cleaning composition.

The cleaning composition of the present invention is superior in both the cleaning performance on coatings and the compatibility with components. The reason for this is not fully clear, but can be assumed as follows.

The solvent (A) contained in the cleaning composition of the present invention has a dipole moment of 5.0 D or more at 25°C, as determined by a density functional theory, and thus has a large electric polarization in molecules. Consequently, the solvent (A) molecules tend to be oriented toward the hydrophilic functional group moiety of a polymer constituting a coating. This molecular orientation can increase the wettability of the cleaning composition on the polymer.

Moreover, the electric polarization in the molecules of the solvent (A) allows these molecules to be close together and stable. Therefore, the solvent (A) molecules are likely to form chains, starting from the molecules oriented toward the hydrophilic functional groups of the polymer of the coating, and may gather near the hydrophilic functional groups. Further, the solvent (A) is highly water-soluble because its dipole moment is 5.0 D or more at 25°C. Once the solvent (A) molecules cluster around the polymer's hydrophilic functional groups, they can easily attract water and help the polymer move into the water. Thus, the cleaning composition can improve the removability of the coating from the object to be cleaned and further improve the ability to clean the coating.

The cleaning composition of the present invention has a water content of 30% by mass or more, which in turn reduces the content of an organic solvent. Accordingly, the cleaning composition also has excellent compatibility with components.

Even if the coating contains a pigment, since the cleaning composition of the present invention acts on the polymer of the coating as described above, the cleaning composition can improve the removability of the coating containing a pigment from the object to be cleaned and further improve the ability to clean the coating containing a pigment.

Because of these effects, the use of the cleaning composition of the present invention for coatings attached to the inkjet head can achieve both ejection recovery based on excellent cleaning performance and excellent compatibility with components.

<Solvent (A)>

From the viewpoint of improving the coating removability and further improving the cleaning performance, the cleaning composition of the present invention contains a solvent (A) (also referred to as a "solvent (A)" below), and the solvent (A) has a dipole moment of 5.0 D or more at 25°C, as determined by a density functional theory.

In the present invention, the dipole moment is measured at 25°C. As described in Examples, the dipole moment is calculated based on the density functional theory using quantum chemistry calculation software TURBOMOLE Ver. 7.7 with the BP86 functional and the def-TZVP basis set. The unit of the dipole moment is "D (debye)."

The dipole moment of the solvent (A) is preferably 5.2 D or more, more preferably 5.4 D or more, and even more preferably 5.6 D or more from the viewpoint of improving the coating removability and further improving the cleaning performance, and also improving the compatibility with components. From the same viewpoint, the dipole moment of the solvent (A) is preferably 6.5 D or less, more preferably 6.3 D or less, and even more preferably 6.1 D or less. Specifically, the dipole moment of the solvent (A) is preferably 5.2 D or more and 6.5 D or less, more preferably 5.4 D or more and 6.3 D or less, and even more preferably 5.6 D or more and 6.1 D or less.

The solvent (A) may be used alone or in combination of two or more types.

The solvent (A) is preferably one or more selected from the group consisting of cyclic carbonates and cyclic sulfones, and more preferably one or more selected from the group consisting of propylene carbonate (dipole moment: 5.64 D), ethylene carbonate (dipole moment: 5.41 D), and sulfolane (dipole moment: 5.39 D) from the viewpoint of improving the coating removability and further improving the cleaning performance.

The propylene carbonate, the ethylene carbonate, and the sulfolane have a dipole moment of 5.0 D or more and are cyclic organic solvents. Therefore, they can easily enter gaps in the polymer of the coating and facilitate the swelling of the polymer. On the other hand, the propylene carbonate, the ethylene carbonate, and the sulfolane are water-soluble and may easily attract water after entering the gaps in the polymer. This can improve the removability of the coating from the object to be cleaned and further improve the ability to clean the coating.

The solvent (A) is more preferably one or more selected from the group consisting of propylene carbonate and ethylene carbonate, and even more preferably propylene carbonate or a mixture of propylene carbonate and ethylene carbonate from the viewpoint of improving the coating removability and further improving the cleaning performance.

When the solvent (A) is a mixture of propylene carbonate and ethylene carbonate, the mass ratio [ethylene carbonate/propylene carbonate] of the content of the ethylene carbonate to the content of the propylene carbonate in the cleaning composition of the present invention is preferably more than 0, and is also preferably 5 or less, more preferably 4 or less, even more preferably 3 or less, still more preferably 2 or less, yet more preferably 1 or less, much more preferably 0.7 or less, further preferably 0.5 or less, and even further preferably 0.3 or less from the viewpoint of achieving both the cleaning performance and the compatibility with components.

The content of the solvent (A) in the cleaning composition of the present invention is preferably 5% by mass or more, more preferably 8% by mass or more, even more preferably 10% by mass or more, still more preferably 15% by mass or more, and yet more preferably 17% by mass or more from the viewpoint of improving the coating removability and further improving the cleaning performance. Furthermore, the content of the solvent (A) in the cleaning composition is preferably 65% by mass or less, more preferably 60% by mass or less, even more preferably 55% by mass or less, still more preferably 45% by mass or less, yet more preferably 40% by mass or less, much more preferably 30% by mass or less, and further preferably 20% by mass or less from the viewpoint of improving the compatibility with components. Specifically, the content of the solvent (A) in the cleaning composition is preferably 5% by mass or more and 65% by mass or less, more preferably 5% by mass or more and 60% by mass or less, even more preferably 8% by mass or more and 55% by mass or less, still more preferably 8% by mass or more and 45% by mass or less, yet more preferably 10% by mass or more and 40% by mass or less, much more preferably 15% by mass or more and 30% by mass or less, and further preferably 17% by mass or more and 20% by mass or less.

<Solvent (B)>

From the viewpoint of improving the dispersibility of the coating that has come off the object to be cleaned and further improving the cleaning performance, the cleaning composition of the present invention preferably contains, in addition to the solvent (A), an organic solvent (B) (also referred to as a "solvent (B)" below) having one or more groups selected from the group consisting of a hydroxy group and a polyoxyalkylene group.

The solvent (B) may be used alone or in combination of two or more types.

Specific examples of the solvent (B) include ethylene glycol, diethylene glycol, polyoxyalkylene phenyl ether, and polyoxyalkylene benzyl ether.

The solvent (B) preferably contains one or more solvents (B1) (also simply referred to as a "solvent (B 1)" below) selected from the group consisting of ethylene glycol, diethylene glycol, polyoxyalkylene phenyl ether, and polyoxyalkylene benzyl ether.

When the cleaning composition of the present invention further contains the solvent (B1) in addition to the solvent (A), the solvent (B1) serves to disperse the coating removed from the object to be cleaned by the solvent (A) into the cleaning composition containing water, because of the high polarity of the solvent (B1) composed of alkylene groups and oxygen atoms, where the oxygen atom is present at each end of the alkylene group or between the alkylene groups. This configuration can further improve the cleaning performance on coatings.

In particular, the solvent (B1) is preferably one or more selected from the group consisting of polyoxyalkylene phenyl ether and polyoxyalkylene benzyl ether from the viewpoint of improving the dispersibility of the coating that has come off the object to be cleaned and further improving the cleaning performance.

The polyoxyalkylene group of the polyoxyalkylene phenyl ether preferably contains a unit derived from an alkylene oxide having 2 to 4 carbon atoms from the viewpoint of improving the dispersibility of the coating that has come off the object to be cleaned and further improving the cleaning performance. Examples of the alkylene oxide include an ethylene oxide, a propylene oxide, and a butylene oxide. The alkylene oxide is preferably one or more selected from the group consisting of an ethylene oxide and a propylene oxide, more preferably includes at least an ethylene oxide, and is even more preferably an ethylene oxide. In other words, the polyoxyalkylene group of the polyoxyalkylene phenyl ether more preferably includes at least a polyoxyethylene group, and is even more preferably a polyoxyethylene group.

Specifically, the polyoxyalkylene phenyl ether is preferably one or more selected from the group consisting of polyoxyethylene phenyl ether and polyoxypropylene phenyl ether. Among these, polyoxyethylene phenyl ether is more preferred.

The average number of moles of the alkylene oxide added in the polyoxyalkylene group of the polyoxyalkylene phenyl ether is preferably 2 or more, more preferably more than 2, and even more preferably 3 or more, and is also preferably 10 or less, more preferably 8 or less, and even more preferably 6 or less from the viewpoint of improving the dispersibility of the coating that has come off the object to be cleaned and further improving the cleaning performance. Specifically, the average number of moles of the alkylene oxide added in the polyoxyalkylene group of the polyoxyalkylene phenyl ether is preferably 2 or more and 10 or less, more preferably more than 2 and 8 or less, and even more preferably 3 or more and 6 or less.

The polyoxyalkylene group of the polyoxyalkylene benzyl ether preferably contains a unit derived from an alkylene oxide having 2 to 4 carbon atoms from the viewpoint of improving the dispersibility of the coating that has come off the object to be cleaned and further improving the cleaning performance. Examples of the alkylene oxide include an ethylene oxide, a propylene oxide, and a butylene oxide. The alkylene oxide is preferably one or more selected from the group consisting of an ethylene oxide and a propylene oxide, more preferably includes at least an ethylene oxide, and is even more preferably an ethylene oxide. In other words, the polyoxyalkylene group of the polyoxyalkylene benzyl ether more preferably includes at least a polyoxyethylene group, and is even more preferably a polyoxyethylene group.

Specifically, the polyoxyalkylene benzyl ether is preferably one or more selected from the group consisting of polyoxyethylene benzyl ether and polyoxypropylene benzyl ether. Among these, polyoxyethylene benzyl ether is more preferred.

The average number of moles of the alkylene oxide added in the polyoxyalkylene group of the polyoxyalkylene benzyl ether is preferably 2 or more, and is also preferably 10 or less, more preferably 8 or less, and even more preferably 6 or less from the viewpoint of improving the dispersibility of the coating that has come off the object to be cleaned and further improving the cleaning performance.

The content of the solvent (B1) in the component (B) is preferably 70% by mass or more, more preferably 80% by mass or more, even more preferably 90% by mass or more, still more preferably 95% by mass or more, and yet more preferably 97% by mass or more, and is also preferably 100% by mass or less, and more preferably 100% by mass from the viewpoint of improving the dispersibility of the coating that has come off the object to be cleaned and further improving the cleaning performance.

The content of the component (B) in the cleaning composition of the present invention is preferably 0.5% by mass or more, more preferably 1% by mass or more, and even more preferably 2% by mass or more from the viewpoint of improving the dispersibility of the coating that has come off the object to be cleaned and further improving the cleaning performance. Furthermore, the content of the component (B) in the cleaning composition is preferably 50% by mass or less, more preferably 40% by mass or less, even more preferably 30% by mass or less, still more preferably 20% by mass or less, and yet more preferably 10% by mass or less from the viewpoint of improving the compatibility with components. Specifically, the content of the solvent (B) in the cleaning composition is preferably 0.5% by mass or more and 50% by mass or less, more preferably 0.5% by mass or more and 40% by mass or less, even more preferably 1% by mass or more and 30% by mass or less, still more preferably 1% by mass or more and 20% by mass or less, and yet more preferably 2% by mass or more and 10% by mass or less.

The content of the solvent (B1) in the cleaning composition of the present invention is preferably 0.5% by mass or more, more preferably 1% by mass or more, and even more preferably 2% by mass or more from the viewpoint of improving the dispersibility of the coating that has come off the object to be cleaned and further improving the cleaning performance. Furthermore, the content of the solvent (B1) in the cleaning composition is preferably 50% by mass or less, more preferably 40% by mass or less, even more preferably 30% by mass or less, still more preferably 20% by mass or less, and yet more preferably 10% by mass or less from the viewpoint of improving the compatibility with components. Specifically, the content of the solvent (B1) in the cleaning composition is preferably 0.5% by mass or more and 50% by mass or less, more preferably 0.5% by mass or more and 40% by mass or less, even more preferably 1% by mass or more and 30% by mass or less, still more preferably 1% by mass or more and 20% by mass or less, and yet more preferably 2% by mass or more and 10% by mass or less.

The mass ratio [solvent (B)/solvent (A)] of the content of the solvent (B) to the content of the solvent (A) in the cleaning composition of the present invention is preferably 0.05 or more, more preferably 0.07 or more, and even more preferably 0.10 or more, and is also preferably 3.0 or less, more preferably 2.5 or less, even more preferably 2.0 or less, still more preferably 1.5 or less, yet more preferably 1.0 or less, much more preferably 0.9 or less, further preferably 0.7 or less, even further preferably 0.5 or less, and still further preferably 0.3 or less from the viewpoint of improving the cleaning performance on coatings. Specifically, the mass ratio [solvent (B)/solvent (A)] is preferably 0.05 or more and 3.0 or less, more preferably 0.05 or more and 2.5 or less, even more preferably 0.05 or more and 2.0 or less, still more preferably 0.07 or more and 1.5 or less, yet more preferably 0.07 or more and 1.0 or less, much more preferably 0.07 or more and 0.9 or less, further preferably 0.10 or more and 0.7 or less, even further preferably 0.10 or more and 0.5 or less, and still further preferably 0.10 or more and 0.3 or less.

(Other solvents)

The cleaning composition of the present invention may contain solvents other than the solvents (A) and (B) to the extent that they do not interfere with the effects of the present invention. Examples of other solvents include gamma-butyrolactone (dipole moment: 4.69 D), 2-pyrrolidone (dipole moment: 4.16 D), dimethyl sulfoxide (dipole moment: 4.10 D), dimethylformamide (dipole moment: 4.06 D), N-methylpyrrolidone (dipole moment: 3.99 D), tetrahydrofuran (dipole moment: 1.92 D), cyclohexane (dipole moment: 0.00 D), and benzene (dipole moment: 0.00 D).

The content of solvents other than the solvents (A) and (B) in the cleaning composition of the present invention is preferably 10% by mass or less, more preferably 5% by mass or less, even more preferably 3% by mass or less, and still more preferably 0% by mass from the viewpoint of improving the cleaning performance on coatings and the compatibility with components.

<Water>

The cleaning composition of the present invention contains water from the viewpoint of improving the cleaning performance on coatings and the compatibility with components. The water may be any of tap water, ion-exchanged water, ultrafiltration water, RO water, and distilled water, but is preferably one or more selected from the group consisting of ion-exchanged water, ultrafiltration water, RO water, and distilled water from the viewpoint of improving the cleaning performance on coatings.

The content of the water in the cleaning composition of the present invention is 30% by mass or more, preferably 35% by mass or more, more preferably 40% by mass or more, even more preferably 45% by mass or more, still more preferably 50% by mass or more, yet more preferably 55% by mass or more, and much more preferably 60% by mass or more, and is also preferably 90% by mass or less, more preferably 85% by mass or less, and even more preferably 80% by mass or less from the viewpoint of improving the cleaning performance on coatings and the compatibility with components. Specifically, the content of the water in the cleaning composition is 30% by mass or more, preferably 35% by mass or more and 90% by mass or less, more preferably 40% by mass or more and 90% by mass or less, even more preferably 45% by mass or more and 85% by mass or less, still more preferably 50% by mass or more and 85% by mass or less, yet more preferably 55% by mass or more and 80% by mass or less, and much more preferably 60% by mass or more and by mass or less.

The mass ratio [solvent (A)/water] of the content of the solvent (A) to the content of the water in the cleaning composition of the present invention is preferably 0.05 or more, more preferably 0.07 or more, even more preferably 0.10 or more, still more preferably 0.15 or more, and yet more preferably 0.20 or more from the viewpoint of improving the cleaning performance on coatings. Furthermore, the mass ratio [solvent (A)/water] is preferably 3.0 or less, more preferably 2.0 or less, even more preferably 1.5 or less, still more preferably 1.0 or less, yet more preferably 0.70 or less, much more preferably 0.50 or less, and further preferably 0.30 or less from the viewpoint of improving the compatibility with components. Specifically, the mass ratio [solvent (A)/water] is preferably 0.05 or more and 3.0 or less, more preferably 0.05 or more and 2.0 or less, even more preferably 0.07 or more and 1.5 or less, still more preferably 0.07 or more and 1.0 or less, yet more preferably 0.10 or more and 0.70 or less, much more preferably 0.15 or more and 0.50 or less, and further preferably 0.20 or more and 0.30 or less.

In addition to the above components, the cleaning composition of the present invention may contain various commonly used additives such as a pH adjuster, an antifoaming agent, a preservative, an antifungal agent, and an anticorrosive agent.

The cleaning composition of the present invention contains neither a pigment nor a polymer.

The cleaning composition of the present invention preferably contains neither an acid nor an oxidizing agent from the viewpoint of the dispersibility of a pigment and a polymer.

The cleaning composition of the present invention may be produced by mixing and stirring the solvent (A) and water, and optionally the solvent (B), the other solvents, and the additives.

(Cleaning method)

The cleaning composition of the present invention is preferably used to clean a coating attached to the object to be cleaned The object to be cleaned is preferably an inkjet head. In other words, a cleaning method using the cleaning composition of the present invention preferably includes cleaning an inkjet head with the cleaning composition.

The cleaning method using the cleaning composition of the present invention preferably includes bringing the cleaning composition into contact with a coating attached to the object to be cleaned The cleaning composition may be brought into contact with the coating by, e.g., an immersion method, a spraying method, a coating method, or a stirring method. Moreover, the cleaning method may include impregnating a liquid-absorbent wiping member such as a nonwoven fabric with the cleaning composition of the present invention, and then wiping and cleaning the surface of the object to be cleaned using the wiping member. This method is preferred to remove a strongly adhered coating.

[Uses of the cleaning composition of the present invention]

The cleaning composition of the present invention is superior in both the cleaning performance on coatings and the compatibility with components. Therefore, the cleaning composition is preferably used, e.g., as a cleaning agent for water-based ink containing a polymer. In the present invention, the term "water-based" means that water accounts for the largest proportion on a mass basis in a medium in which the polymer is dispersed. In this case, the water-based ink can be efficiently cleaned even though the polymer is a water-insoluble polymer.

In the present invention, the term "water-insoluble polymer" means that the polymer dissolves in an amount of 10 g or less after it has been dried at 105°C for 2 hours to reach a constant weight and then saturated in 100 g of water at 25°C. The amount of the polymer dissolved is preferably 5 g or less, and more preferably 1 g or less. When the water-insoluble polymer is an anionic polymer, the amount of the polymer dissolved corresponds to the point at which the anionic groups of the polymer are 100% neutralized with sodium hydroxide. When the water-insoluble polymer is a cationic polymer, the amount of the polymer dissolved corresponds to the point at which the cationic groups of the polymer are 100% neutralized with hydrochloric acid.

When the cleaning composition of the present invention is used as a cleaning agent for water-based ink containing a polymer and water (also simply referred to as "water-based ink" below), the cleaning agent is preferably used for the water-based ink for flexographic printing, gravure printing, or inkjet recording, and more preferably used for the water-based ink for inkjet recording.

The term "recording" refers to a concept that includes printing of characters and images for recording. The cleaning composition of the present invention may be used as a cleaning agent to remove a coating of the water-based ink for inkjet recording, which is attached to an inkjet head. In such a case, the ejection recovery of the inkjet head can be improved by the cleaning effect of the cleaning composition.

The cleaning composition used as a cleaning agent for the water-based ink for inkjet recording can also serve to clean, e.g., an inkjet recording apparatus using the water-based ink and tools for maintenance of the inkjet recording apparatus. In particular, the cleaning composition is preferably used to clean the inkjet recording apparatus, and more preferably used to clean the inkjet head. Specifically, the cleaning composition can be used to clean, e.g., ink discharge ports of the inkjet head, portions around the ink discharge ports, and ink supply paths from ink tanks or cartridges to the ink discharge ports in the inkjet recording apparatus. More specifically, the cleaning composition may be suitable as a cleaning agent (spray liquid or wiping liquid) to clean the water-based ink attached to a nozzle plate with many nozzle holes that is provided for each color of ink in the inkjet head. Thus, the cleaning composition of the present invention is preferably used as an inkjet head cleaning composition.

<Water-basedink>

The water-based ink that is to be a target of the cleaning composition of the present invention contains a polymer and water. The water-based ink may be a so-called undercoat liquid and/or overcoat liquid The water-based ink may further contain a pigment in addition to the polymer and water. In other words, the coating to be cleaned with the cleaning composition of the present invention contains at least a component derived from the polymer of the water-based ink, and preferably contains a component derived from the polymer and a component derived from the pigment.

[Polymer]

The polymer contained in the water-based ink that is to be a target of the cleaning composition of the present invention preferably functions as at least one of a pigment dispersant for dispersing a pigment and a fixing agent for printing media.

The polymer that functions as a pigment dispersant (also referred to as a "pigment dispersing polymer" below) is preferably a water-insoluble polymer from the viewpoint of ink dispersion stability and ejection recovery.

Preferred examples of the pigment dispersing polymer include one or more selected from the group consisting of a polyester resin, a polyurethane resin, and a vinyl resin from the viewpoint of ink dispersion stability and ejection recovery. Among these, the pigment dispersing polymer is more preferably one or more selected from the group consisting of a polyester resin and a vinyl resin, and even more preferably a polyester resin.

The polyester resin can be obtained by polycondensation of an alcohol component and a carboxylic acid component. Examples of the alcohol component include aromatic or aliphatic polyols. The alcohol component preferably contains an aromatic diol such as an alkylene oxide adduct of bisphenol A. Examples of the carboxylic acid component include aromatic dicarboxylic acids, aliphatic dicarboxylic acids, and trivalent or higher polycarboxylic acids. The carboxylic acid component preferably contains an aliphatic dicarboxylic acid such as fumaric acid.

The vinyl resin can be obtained by addition polymerization of a monomer mixture using a known method. The monomer mixture contains an ionic monomer and one or more monomers selected from the group consisting of a hydrophobic monomer and a hydrophilic nonionic monomer. The ionic monomer may be, e.g., an acrylic acid or a methacrylic acid. The hydrophobic monomer may be, e.g., alkyl (meth)acrylate or an aromatic group-containing monomer. The hydrophilic nonionic monomer may be, e.g., polyalkylene glycol (meth)acrylate.

In particular, the water-based ink preferably contains a water-insoluble polymer having anionic groups such as carboxy groups to disperse a pigment from the viewpoint of ink dispersion stability and ejection recovery.

From the viewpoint of ink dispersion stability and ejection recovery, the water-based ink preferably contains a pigment in the form of water-insoluble polymer particles containing the pigment (also simply referred to as "pigment-containing polymer particles" below) by using the above water-insoluble polymer as the pigment dispersing polymer. The pigment-containing polymer particles may be made up of the pigment and the water-insoluble polymer, and the water-insoluble polymer may be adsorbed onto the pigment surface in the water-based ink. For example, the pigment-containing polymer particles may have any of the following configurations: the pigment is encapsulated in the polymer particles; the pigment is uniformly dispersed in the polymer particles; the pigment is exposed on the surface of the polymer particles; or any combination of these configurations.

The polymer that functions as a fixing agent for printing media (also referred to as a "fixing aid polymer" below) is preferably a water-insoluble polymer from the viewpoint of imparting better ink fixation to printed materials.

Preferred examples of the fixing aid polymer include one or more selected from the group consisting of a polyester resin, an acrylic resin, a styrene/(meth)acrylic resin, a styrene resin, a styrene/butadiene resin, a butadiene resin, a vinyl chloride resin, a vinyl acetate resin, and a polyurethane resin from the viewpoint of imparting better ink fixation to printed materials. Among these, the fixing aid polymer is more preferably one or more selected from the group consisting of a polyester resin, an acrylic resin, and a styrene/acrylic resin, and even more preferably a polyester resin.

The fixing aid polymer may be used alone or in combination of two or more types.

The fixing aid polymer is preferably composed of water-insoluble polymer particles containing no pigment, and more preferably composed of polyester resin particles containing no pigment from the viewpoint of ink fixation on printing media and ink abrasion resistance of printed materials.

The polyester resin of the pigment-free polyester resin particles can be obtained by polycondensation of an alcohol component and a carboxylic acid component. Examples of the alcohol component include aromatic or aliphatic polyols. The alcohol component preferably contains an aromatic diol such as an alkylene oxide adduct of bisphenol A. Examples of the carboxylic acid component include aromatic dicarboxylic acids, aliphatic dicarboxylic acids, and trivalent or higher polycarboxylic acids. The carboxylic acid component preferably contains an aromatic dicarboxylic acid, an aliphatic dicarboxylic acid, and a trivalent or higher polycarboxylic acid

The pigment-free water-insoluble polymer particles are preferably used as a dispersion for ease of handling, and may be either a synthesized product obtained by, e.g., emulsion polymerization or a commercially available product. Examples of the commercially available dispersion of the pigment-free water-insoluble polymer particles include the following: dispersions of acrylic resin, e.g., "NeoCryl A-1127' (anionic self-crosslinking water-based acrylic resin, manufactured by DSM NeoResins, Inc.) and "JONCRYL 390" (manufactured by BASF Japan Ltd); dispersions of styrene/acrylic resin, e.g., "JONCRYL 7100," "JONCRYL 734," and "JONCRYL 538" (all manufactured by BASF Japan Ltd.); dispersions of styrene/butadiene resin, e.g., "SR-100" and "SR102" (both manufactured by NIPPON A & L INC.); dispersions of vinyl chloride resin, e.g., "VINYBLAN 701" (manufactured by Nissin Chemical Industry Co., Ltd); and dispersions of polyurethane resin, e.g., "WBR-2018" and "WBR-2000U" (both manufactured by Taisei Fine Chemical Co., Ltd.).

When the water-based ink contains the pigment-containing polymer particles, the weight average molecular weight of the water-insoluble polymer of the pigment-containing polymer particles is preferably 5,000 or more, more preferably 7,000 or more, and even more preferably 10,000 or more, and is also preferably 100,000 or less, more preferably 50,000 or less, and even more preferably 30,000 or less. Specifically, the weight average molecular weight of the water-insoluble polymer of the pigment-containing polymer particles is preferably 5,000 or more and 100,000 or less, more preferably 7,000 or more and 50,000 or less, and even more preferably 10,000 or more and 30,000 or less.

When the water-based ink contains the pigment-free water-insoluble polymer particles, the weight average molecular weight of the water-insoluble polymer of the pigment-free water-insoluble polymer particles is preferably 5,000 or more, more preferably 7,000 or more, and even more preferably 10,000 or more, and is also preferably 100,000 or less, more preferably 50,000 or less, and even more preferably 30,000 or less. Specifically, the weight average molecular weight of the water-insoluble polymer of the pigment-free water-insoluble polymer particles is preferably 5,000 or more and 100,000 or less, more preferably 7,000 or more and 50,000 or less, and even more preferably 10,000 or more and 30,000 or less.

The weight average molecular weight of the water-insoluble polymer can be measured by gel permeation chromatography, and specifically measured by the method described in Examples.

The acid value of the polymer is preferably 5 mgKOH/g or more, more preferably 10 mgKOH/g or more, and even more preferably 20 mgKOH/g or more from the viewpoint of improving the coating removability and the cleaning performance. The upper limit of the acid value of the polymer is not particularly limited because the higher the acid value of the polymer, the better the removal of the coating with the cleaning agent of the present invention.

[Pigment]

The pigment contained in the water-based ink that is to be a target of the cleaning composition of the present invention may be either an inorganic pigment or an organic pigment. These pigments may also be used in combination with an extender pigment as necessary.

The inorganic pigment may be, e.g., carbon black or a metal oxide. The carbon black is preferred as black ink. Examples of the carbon black include furnace black, lamp black, acetylene black, and channel black. The metal oxide, including, e.g., titanium dioxide, zinc oxide, silica, alumina, and magnesium oxide, may be used as white ink.

Examples of the organic pigment include azo pigments, diazo pigments, phthalocyanine pigments, quinacridone pigments, isoindolinone pigments, dioxazine pigments, perylene pigments, perinone pigments, thioindigo pigments, anthraquinone pigments, and quinophthalone pigments.

Achromatic ink may contain achromatic pigments of e.g., white, black, or gray. Chromatic ink may contain chromatic pigments of e.g., yellow, magenta, cyan, red, blue, orange, or green.

Examples of the extender pigment include silica, calcium carbonate, and talc.

The pigment may be used alone or in combination of two or more types.

The pigment may be contained in the water-based ink in the form of a self-dispersing pigment, a pigment dispersed with a dispersant, or water-insoluble polymer particles containing the pigment.

The water-based ink may further contain a neutralizer, an organic solvent, and a surfactant, as necessary, other than the polymer, water, and the pigment. The water-based ink may also contain various additives as optional components, including, e.g., a humectant, a wetting agent, a penetrating agent, a dispersant, a surfactant, a viscosity modifier, an antifoaming agent, a preservative, an antifungal agent, and an anticorrosive agent.

The water-based ink may be produced by mixing and stirring the pigment, the water-insoluble polymer, and water, and optionally a neutralizer, an organic solvent, a surfactant, or the like.

When the water-based ink contains the pigment-containing polymer particles, first, a dispersion of the pigment-containing polymer particles may be prepared by dispersing the pigment and the water-insoluble polymer, and optionally a neutralizer, a surfactant, or the like, by a known method, and then the dispersion may be blended into the water-based ink.

The content of the water-insoluble polymer in the water-based ink is preferably 1% by mass or more, more preferably 3% by mass or more, and even more preferably 5% by mass or more from the viewpoint of ink dispersion stability and ejection recovery and the viewpoint of ink fixation on printing media and ink abrasion resistance of printed materials. Furthermore, the content of the water-insoluble polymer in the water-based ink is preferably 20% by mass or less, more preferably 15% by mass or less, and even more preferably 10% by mass or less from the viewpoint of ink viscosity. Specifically, the content of the water-insoluble polymer in the water-based ink is preferably 1% by mass or more and 20% by mass or less, more preferably 3% by mass or more and 15% by mass or less, and even more preferably 5% by mass or more and 10% by mass or less.

When the water-based ink contains a pigment, the content of the pigment in the water-based ink is preferably 1% by mass or more, more preferably 2% by mass or more, and even more preferably 3% by mass or more from the viewpoint of the print density of printed materials. Furthermore, the content of the pigment in the water-based ink is preferably 15% by mass or less, more preferably 10% by mass or less, even more preferably 8% by mass or less, and still more preferably 6% by mass or less from the viewpoint of ink viscosity and ink abrasion resistance of printed materials. Specifically, the content of the pigment in the water-based ink is preferably 1% by mass or more and 15% by mass or less, more preferably 1% by mass or more and 10% by mass or less, even more preferably 2% by mass or more and 8% by mass or less, and still more preferably 3% by mass or more and 6% by mass or less.

When the water-based ink contains the pigment-containing polymer particles and the pigment-free polymer particles, the content of the water-insoluble polymer is the total amount of the water-insoluble polymer contained in the pigment-containing polymer particles and the pigment-free polymer particles.

The content of water in the water-based ink is preferably 35% by mass or more, more preferably 40% by mass or more, and even more preferably 45% by mass or more, and is also preferably 80% by mass or less, more preferably 75% by mass or less, and even more preferably 70% by mass or less from the viewpoint of ink dispersion stability and ink abrasion resistance of printed materials. Specifically, the content of water in the water-based ink is preferably 35% by mass or more and 80% by mass or less, more preferably 40% by mass or more and 75% by mass or less, and even more preferably 45% by mass or more and 70% by mass or less.

The cleaning method using the cleaning composition of the present invention as a cleaning agent for water-based ink preferably includes bringing the cleaning composition into contact with a coating of the water-based ink attached to the object to be cleaned. The cleaning composition may be brought into contact with the coating by, e.g., an immersion method, a spraying method, a coating method, or a stirring method, as described above.

The cleaning method may include impregnating a liquid absorbent wiping member such as a nonwoven fabric with the cleaning composition of the present invention, and then wiping the coating attached to, e.g., the inkjet nozzle surface or nozzle holes of an inkjet head. When different types of ink are used, the cleaning method may include cleaning ink channels in a printer before and after changing the ink by repeatedly supplying the cleaning composition placed in a cartridge to the ink channels and discharging it out of the ink channels using the supply and discharge mechanisms of the printer. When an inkjet head is not used for a long period of time, the cleaning method may include wiping the coating off the inkjet head, filling the inkjet head with the cleaning composition, and storing the cleaning composition with the cap securely on the inkjet head. Any wiping member that is liquid-absorbent may be suitably used, and examples of the wiping member include fabrics such as a woven fabric, a knitted fabric, and a nonwoven fabric, sponges, and pulp.

In the cleaning method, the cleaning composition is brought into contact with the coating at a temperature of preferably 0°C or more, more preferably 10°C or more, and even more preferably 20°C or more from the viewpoint of enabling the cleaning composition to exhibit more excellent cleaning performance. Furthermore, the coating is cleaned at a temperature of preferably less than 100°C, more preferably 80°C or less, even more preferably 70°C or less, and still more preferably 50°C or less from the viewpoint of reducing energy. Specifically, the cleaning process is performed at a temperature of preferably 0°C or more and less than 100°C, more preferably 0°C or more and 80°C or less, even more preferably 10°C or more and 70°C or less, and still more preferably 20°C or more and 50°C or less.

The present invention provides the cleaning composition that is superior in both the cleaning performance on coatings and the compatibility with components.

The present invention also includes the following aspects <1> to <53>.

<1> A cleaning composition containing a solvent (A) and water,

   wherein the solvent (A) has a dipole moment of 5.0 D or more at 25°C, which is determined by a density functional theory, and
   a content of the water in the cleaning composition is 30% by mass or more.

<2> The cleaning composition according to <1>, wherein the solvent (A) is one or more selected from the group consisting of propylene carbonate, ethylene carbonate, and sulfolane.

<3> The cleaning composition according to <1> or <2>, further containing an organic solvent (B) having one or more groups selected from the group consisting of a hydroxy group and a polyoxyalkylene group.

<4> The cleaning composition according to any one of <1> to <3>, wherein the organic solvent (B) contains one or more solvents (B1) selected from the group consisting of ethylene glycol, diethylene glycol, polyoxyalkylene phenyl ether, and polyoxyalkylene benzyl ether.

<5> The cleaning composition according to <4>, wherein the polyoxyalkylene group of the polyoxyalkylene phenyl ether or the polyoxyalkylene benzyl ether is a polyoxyethylene group.

<6> The cleaning composition according to <5>, wherein an average number of moles of ethylene oxide added in the polyoxyethylene group is 2 or more and 6 or less.

<7> The cleaning composition according to any one of <1> to <6>, wherein the content of the water in the cleaning composition is 30% by mass or more and 90% by mass or less.

<8> A cleaning composition containing a solvent (A), an organic solvent (B), and water,

   wherein the solvent (A) has a dipole moment of 5.0 D or more at 25°C, which is determined by a density functional theory,
   a content of the water in the cleaning composition is 30% by mass or more and 90% by mass or less,
   the solvent (A) is propylene carbonate, and
   the organic solvent (B) is polyoxyethylene phenyl ether.

<9> A cleaning composition containing a solvent (A), an organic solvent (B), and water,

   wherein the solvent (A) has a dipole moment of 5.0 D or more at 25°C, which is determined by a density functional theory,
   a content of the water in the cleaning composition is 30% by mass or more and 90% by mass or less,
   the solvent (A) is propylene carbonate, and
   the organic solvent (B) is polyoxyethylene phenyl ether in which an average number of moles of ethylene oxide added in a polyoxyethylene group is 2.

<10> The cleaning composition according to <9>, wherein a content of the propylene carbonate in the cleaning composition is 5% by mass or more and 60% by mass or less, and
a content of the polyoxyethylene phenyl ether in the cleaning composition is 0.5% by mass or more and 50% by mass or less, where the average number of moles of ethylene oxide added in the polyoxyethylene group of the polyoxyethylene phenyl ether is 2.

<11> An inkjet head cleaning composition containing a solvent (A) and water,

wherein the solvent (A) has a dipole moment of 5.0 D or more at 25°C, which is determined by a density functional theory, and
a content of the water in the inkjet head cleaning composition is 30% by mass or more.

<12> The inkjet head cleaning composition according to <11>, wherein the solvent (A) is one or more selected from the group consisting of propylene carbonate, ethylene carbonate, and sulfolane.
<13> The inkjet head cleaning composition according to <11> or <12>, further containing an organic solvent (B) having one or more groups selected from the group consisting of a hydroxy group and a polyoxyalkylene group.
<14> The inkjet head cleaning composition according to <13>, wherein the organic solvent (B) contains one or more solvents (B1) selected from the group consisting of ethylene glycol, diethylene glycol, polyoxyalkylene phenyl ether, and polyoxyalkylene benzyl ether.
<15> The inkjet head cleaning composition according to <14>, wherein the polyoxyalkylene group of the polyoxyalkylene phenyl ether or the polyoxyalkylene benzyl ether is a polyoxyethylene group.
<16> The inkjet head cleaning composition according to <15>, wherein an average number of moles of ethylene oxide added in the polyoxyethylene group is 2 or more and 6 or less.
<17> The inkjet head cleaning composition according to any one of <11> to <16>, wherein the content of the water in the inkjet head cleaning composition is 30% by mass or more and 90% by mass or less.
<18> An inkjet head cleaning composition containing a solvent (A), an organic solvent (B), and water,

wherein the solvent (A) has a dipole moment of 5.0 D or more at 25°C, which is determined by a density functional theory,
a content of the water in the inkjet head cleaning composition is 30% by mass or more and 90% by mass or less,
the solvent (A) is propylene carbonate, and
the organic solvent (B) is polyoxyethylene phenyl ether.

<19> An inkjet head cleaning composition containing a solvent (A), an organic solvent (B), and water,

wherein the solvent (A) has a dipole moment of 5.0 D or more at 25°C, which is determined by a density functional theory,
a content of the water in the inkjet head cleaning composition is 30% by mass or more and 90% by mass or less,
the solvent (A) is propylene carbonate, and
the organic solvent (B) is polyoxyethylene phenyl ether in which an average number of moles of ethylene oxide added in a polyoxyethylene group is 2.

<20> The inkjet head cleaning composition according to <19>, wherein a content of the propylene carbonate in the inkjet head cleaning composition is 5% by mass or more and 60% by mass or less, and
a content of the polyoxyethylene phenyl ether in the inkjet head cleaning composition is 0.5% by mass or more and 50% by mass or less, where the average number of moles of ethylene oxide added in the polyoxyethylene group of the polyoxyethylene phenyl ether is 2.
<21> An inkjet head cleaning composition containing a solvent (A) and water and being for use in an inkjet head that ejects water-based ink for inkjet recording,

wherein the solvent (A) has a dipole moment of 5.0 D or more at 25°C, which is determined by a density functional theory,
a content of the water in the inkjet head cleaning composition is 30% by mass or more, and
the water-based ink for inkjet recording contains a polymer with an acid value of 5 mgKOH/g or more and water.

<22> The inkjet head cleaning composition according to <21>, wherein the polymer has an acid value of 5 mgKOH/g or more and 300 mgKOH/g or less.
<23> The inkjet head cleaning composition according to <21> or <22>, wherein the solvent (A) is one or more selected from the group consisting of propylene carbonate, ethylene carbonate, and sulfolane.
<24> The inkjet head cleaning composition according to any one of <21> to <23>, further containing an organic solvent (B) having one or more groups selected from the group consisting of a hydroxy group and a polyoxyalkylene group.

<25> The inkjet head cleaning composition according to any one of <21> to <24>, wherein the organic solvent (B) contains one or more solvents (B1) selected from the group consisting of ethylene glycol, diethylene glycol, polyoxyalkylene phenyl ether, and polyoxyalkylene benzyl ether.

<26> The inkjet head cleaning composition according to <25>, wherein the polyoxyalkylene group of the polyoxyalkylene phenyl ether or the polyoxyalkylene benzyl ether is a polyoxyethylene group.

<27> The inkjet head cleaning composition according to <26>, wherein an average number of moles of ethylene oxide added in the polyoxyethylene group is 2 or more and 6 or less.

<28> The inkjet head cleaning composition according to any one of <21> to <27>, wherein the content of the water in the inkjet head cleaning composition is 30% by mass or more and 90% by mass or less.

<29> An inkjet head cleaning composition containing a solvent (A), an organic solvent (B), and water and being for use in an inkjet head that ejects water-based ink for inkjet recording,

wherein the solvent (A) has a dipole moment of 5.0 D or more at 25°C, which is determined by a density functional theory,
a content of the water in the inkjet head cleaning composition is 30% by mass or more and 90% by mass or less,
the solvent (A) is propylene carbonate,
a content of the propylene carbonate in the inkjet head cleaning composition is 5% by mass or more and 60% by mass or less,
the organic solvent (B) is polyoxyethylene phenyl ether in which an average number of moles of ethylene oxide added in a polyoxyethylene group is 2,
a content of the polyoxyethylene phenyl ether in the inkjet head cleaning composition is 0.5% by mass or more and 50% by mass or less, where the average number of moles of ethylene oxide added in the polyoxyethylene group of the polyoxyethylene phenyl ether is 2,
the water-based ink for inkjet recording contains a polymer with an acid value of 5 mgKOH/g or more and 300 mgKOH/g or less and water,
the polymer is a vinyl polymer with a weight average molecular weight of 5,000 or more and 100,000 or less, and
a content of the vinyl polymer in the water-based ink for inkjet recording is 1% by mass or more and 20% by mass or less.

<30> The inkjet head cleaning composition according to <29>, wherein the vinyl polymer has an acid value of 60 mgKOH/g or more and 300 mgKOH/g or less.

<31> The inkjet head cleaning composition according to <29> or <30>, wherein the water-based ink for inkjet recording further contains a pigment, and
a content of the pigment in the water-based ink for inkjet recording is 1% by mass or more and 15% by mass or less.

<32> An inkjet head cleaning composition containing a solvent (A), an organic solvent (B), and water and being for use in an inkjet head that ejects water-based ink for inkjet recording,

wherein the solvent (A) has a dipole moment of 5.0 D or more at 25°C, which is determined by a density functional theory,
a content of the water in the inkjet head cleaning composition is 30% by mass or more and 90% by mass or less,
the solvent (A) is propylene carbonate,
a content of the propylene carbonate in the inkjet head cleaning composition is 5% by mass or more and 60% by mass or less,
the organic solvent (B) is polyoxyethylene phenyl ether in which an average number of moles of ethylene oxide added in a polyoxyethylene group is 2,
a content of the polyoxyethylene phenyl ether in the inkjet head cleaning composition is 0.5% by mass or more and 50% by mass or less, where the average number of moles of ethylene oxide added in the polyoxyethylene group of the polyoxyethylene phenyl ether is 2,
the water-based ink for inkjet recording contains a polymer with an acid value of 5 mgKOH/g or more and 300 mgKOH/g or less and water,
the polymer is polyester with a weight average molecular weight of 5,000 or more and 100,000 or less, and
a content of the polyester in the water-based ink for inkjet recording is 1% by mass or more and 20% by mass or less.

<33> The inkjet head cleaning composition according to <32>, wherein the polyester has an acid value of 5 mgKOH/g or more and 50 mgKOH/g or less.

<34> The inkjet head cleaning composition according to <32> or <33>, wherein the water-based ink for inkjet recording further contains a pigment, and

a content of the pigment in the water-basedink for inkjet recording is 1% by mass or more and 15% by mass or less.

<35> Use of a cleaning composition as an inkjet head cleaning agent, the cleaning composition containing a solvent (A) and water,

wherein the solvent (A) has a dipole moment of 5.0 D or more at 25°C, which is determined by a density functional theory, and

a content of the water in the cleaning composition is 30% by mass or more.

<36> The use according to <35>, wherein the solvent (A) is one or more selected from the group consisting of propylene carbonate, ethylene carbonate, and sulfolane.

<37> The use according to <35> or <36>, wherein the cleaning composition further contains an organic solvent (B) having one or more groups selected from the group consisting of a hydroxy group and a polyoxyalkylene group.

<38> Use of a cleaning composition as an inkjet head cleaning agent, the cleaning composition containing a solvent (A), an organic solvent (B), and water,

wherein the solvent (A) has a dipole moment of 5.0 D or more at 25°C, which is determined by a density functional theory,

a content of the water in the cleaning composition is 30% by mass or more and 90% by mass or less,

the solvent (A) is propylene carbonate,

a content of the propylene carbonate in the cleaning composition is 5% by mass or more and 60% by mass or less,

the organic solvent (B) is polyoxyethylene phenyl ether in which an average number of moles of ethylene oxide added in a polyoxyethylene group is 2, and

a content of the polyoxyethylene phenyl ether in the cleaning composition is 0.5% by mass or more and 50% by mass or less, where the average number of moles of ethylene oxide added in the polyoxyethylene group of the polyoxyethylene phenyl ether is 2.

<39> Use of a cleaning composition as a cleaning agent for an inkjet head that ejects water-based ink for inkjet recording, the cleaning composition containing a solvent (A), an organic solvent (B), and water,

wherein the solvent (A) has a dipole moment of 5.0 D or more at 25°C, which is determined by a density functional theory,

a content of the water in the cleaning composition is 30% by mass or more and 90% by mass or less,

the solvent (A) is propylene carbonate,

a content of the propylene carbonate in the cleaning composition is 5% by mass or more and 60% by mass or less,

the organic solvent (B) is polyoxyethylene phenyl ether in which an average number of moles of ethylene oxide added in a polyoxyethylene group is 2,

a content of the polyoxyethylene phenyl ether in the cleaning composition is 0.5% by mass or more and 50% by mass or less, where the average number of moles of ethylene oxide added in the polyoxyethylene group of the polyoxyethylene phenyl ether is 2,

the water-based ink for inkjet recording contains a polymer with an acid value of 5 mgKOH/g or more and 300 mgKOH/g or less and water,

the polymer is a vinyl polymer with a weight average molecular weight of 5,000 or more and 100,000 or less, and

a content of the vinyl polymer in the water-based ink for inkjet recording is 1% by mass or more and 20% by mass or less.

<40> The use according to <39>, wherein the vinyl polymer has an acid value of 60 mgKOH/g or more and 300 mgKOH/g or less.

<41> The use according to <39> or <40>, wherein the water-based ink for inkjet recording further contains a pigment, and

a content of the pigment in the water-basedink for inkjet recording is 1% by mass or more and 15% by mass or less.

<42> Use of a cleaning composition as a cleaning agent for an inkjet head that ejects water-based ink for inkjet recording, the cleaning composition containing a solvent (A), an organic solvent (B), and water,

wherein the solvent (A) has a dipole moment of 5.0 D or more at 25°C, which is determined by a density functional theory,

a content of the water in the cleaning composition is 30% by mass or more and 90% by mass or less,

the solvent (A) is propylene carbonate,
a content of the propylene carbonate in the cleaning composition is 5% by mass or more and 60% by mass or less,
the organic solvent (B) is polyoxyethylene phenyl ether in which an average number of moles of ethylene oxide added in a polyoxyethylene group is 2,
a content of the polyoxyethylene phenyl ether in the cleaning composition is 0.5% by mass or more and 50% by mass or less, where the average number of moles of ethylene oxide added in the polyoxyethylene group of the polyoxyethylene phenyl ether is 2,
the water-based ink for inkjet recording contains a polymer with an acid value of 5 mgKOH/g or more and 300 mgKOH/g or less and water,
the polymer is polyester with a weight average molecular weight of 5,000 or more and 100,000 or less, and
a content of the polyester in the water-based ink for inkjet recording is 1% by mass or more and 20% by mass or less.

<43> The use according to <42>, wherein the polyester has an acid value of 5 mgKOH/g or more and 50 mgKOH/g or less.
<44> The use according to <42> or <43>, wherein the water-basedink for inkjet recording further contains a pigment, and
a content of the pigment in the water-basedink for inkjet recording is 1% by mass or more and 15% by mass or less.
<45> A method for cleaning an inkjet head, comprising:

using a cleaning composition containing a solvent (A) and water,
wherein the solvent (A) has a dipole moment of 5.0 D or more at 25°C, which is determined by a density functional theory, and
a content of the water in the cleaning composition is 30% by mass or more.

<46> The method according to <45>, wherein the solvent (A) is one or more selected from the group consisting of propylene carbonate, ethylene carbonate, and sulfolane.
<47> The method according to <45> or <46>, wherein the cleaning composition further contains an organic solvent (B) having one or more groups selected from the group consisting of a hydroxy group and a polyoxyalkylene group.
<48> A method for cleaning an inkjet head that ejects water-based ink for inkjet recording, comprising:

using a cleaning composition containing a solvent (A), an organic solvent (B), and water,
wherein the solvent (A) has a dipole moment of 5.0 D or more at 25°C, which is determined by a density functional theory,
a content of the water in the cleaning composition is 30% by mass or more and 90% by mass or less,
the solvent (A) is propylene carbonate,
a content of the propylene carbonate in the cleaning composition is 5% by mass or more and 60% by mass or less,
the organic solvent (B) is polyoxyethylene phenyl ether in which an average number of moles of ethylene oxide added in a polyoxyethylene group is 2,
a content of the polyoxyethylene phenyl ether in the cleaning composition is 0.5% by mass or more and 50% by mass or less, where the average number of moles of ethylene oxide added in the polyoxyethylene group of the polyoxyethylene phenyl ether is 2,
the water-based ink for inkjet recording contains a polymer with an acid value of 5 mgKOH/g or more and 300 mgKOH/g or less and water,
the polymer is a vinyl polymer with a weight average molecular weight of 5,000 or more and 100,000 or less, and
a content of the vinyl polymer in the water-based ink for inkjet recording is 1% by mass or more and 20% by mass or less.

<49> The method according to <48>, wherein the vinyl polymer has an acid value of 60 mgKOH/g or more and 300 mgKOH/g or less.
<50> The method according to <48> or <49>, wherein the water-based ink for inkjet recording further contains a pigment, and
a content of the pigment in the water-basedink for inkjet recording is 1% by mass or more and 15% by mass or less.
<51> A method for cleaning an inkjet head that ejects water-based ink for inkjet recording, comprising:

using a cleaning composition containing a solvent (A), an organic solvent (B), and water,
wherein a content of the water in the cleaning composition is 30% by mass or more and 90% by mass or less,
the solvent (A) is propylene carbonate,

a content of the propylene carbonate in the cleaning composition is 5% by mass or more and 60% by mass or less,

the organic solvent (B) is polyoxyethylene phenyl ether in which an average number of moles of ethylene oxide added in a polyoxyethylene group is 2,

a content of the polyoxyethylene phenyl ether in the cleaning composition is 0.5% by mass or more and 50% by mass or less, where the average number of moles of ethylene oxide added in the polyoxyethylene group of the polyoxyethylene phenyl ether is 2,

the water-based ink for inkjet recording contains a polymer with an acid value of 5 mgKOH/g or more and 300 mgKOH/g or less and water,

the polymer is polyester with a weight average molecular weight of 5,000 or more and 100,000 or less, and

a content of the polyester in the water-based ink for inkjet recording is 1% by mass or more and 20% by mass or less.

<52> The method according to <51>, wherein the polyester has an acid value of 5 mgKOH/g or more and 50 mgKOH/g or less.

<53> The method according to <51> or <52>, wherein the water-based ink for inkjet recording further contains a pigment, and

a content of the pigment in the water-basedink for inkjet recording is 1% by mass or more and 15% by mass or less.

Examples

In the following Production Examples, Examples, and Comparative Examples, "parts" and "%" respectively represent "parts by mass" and "% by mass" unless otherwise specified. The physical properties were measured or calculated by the following methods.

[Dipole moment of solvent at 25°C]

The dipole moment of a solvent at 25°C was calculated based on the density functional theory using quantum chemistry calculation software TURBOMOLE Ver. 7.7, which had been jointly developed by the Karlsruhe Research Center and Karlsruhe University in Germany. The calculation employs the BP86 functional and the def-TZVP basis set. A molecule with multiple conformations was assumed to exist in a single conformation based on the most stable conformation in a vacuum.

[Softening point of polyester resin]

Using a flow tester "CFT-500D" (manufactured by Shimadzu Corporation), a 1 g sample was heated at a rate of 6°C/min and extruded through a nozzle of 1 mm diameter and 1 mm length under a load of 1.96 MPa applied by a plunger. The plunger displacement was plotted against the temperature, and the softening point was defined as the temperature at which half of the sample had flowed out.

[Glass transition temperature of polyester resin]

Using a differential scanning calorimeter "Pyris 6 DSC" (manufactured by PerkinElmer, Inc.), 5 mg of sample was weighed into an aluminum pan, heated to 200°C, and then cooled from that temperature to 0°C at a rate of 10°C/min. Next, the sample was heated at a rate of 10° C./min. The glass transition temperature was defined as the temperature at the intersection between the extrapolated baseline below the maximum endothermic peak temperature and the tangent line representing the maximum slope from the leading edge of the peak to its apex.

When an aqueous dispersion was used, a sample was prepared by freeze-drying the aqueous dispersion at -10°C for 9 hours with a freeze dryer "FDU-2100" manufactured by TOKYO RIKAKIKAI CO., LTD.

[Acid value of polyester resin]

The acid value was measured in accordance with the neutralization titration method described in JIS K 0070: 1992, where the measurement solvent was changed from the mixed solvent of ethanol and ether to a mixed solvent of acetone and toluene [acetone : toluene = 1 : 1 (volume ratio)].

[Weight average molecular weight (Mw) of polyester resin]

The weight average molecular weight was measured by gel permeation chromatography as follows.

(1) Preparation of sample solution

A polyester resin was dissolved in chloroform to obtain a solution with a concentration of 0.5 g/100 mL. This solution was filtered through a fluororesin filter "FP-200" having a pore size of 2 pm (manufactured by Sumitomo Electric Industries, Ltd.) to remove insoluble components. The resulting solution was used as a sample solution.

(2) Measurement of molecular weight

Using the following measuring device and analytical column, tetrahydrofuran as a solvent was allowed to flow at a flow rate of 1 mL/min, and the column was stabilized in a constant temperature bath at 40°C. Then, 100 mL of the sample solution was placed in the column and measured. The weight average molecular weight of the sample was calculated based on a predetermined calibration curve by using the following monodisperse polystyrene as a standard sample: monodisperse polystyrene with a weight average molecular weight (Mw) of $2.63 \times 10^3$, $2.06 \times 10^4$, or $1.02 \times 10^5$ manufactured by Tosoh Corporation; and monodisperse polystyrene with a weight average molecular weight (Mw) of $2.10 \times 10^3$, $7.00 \times 10^3$, or $5.04 \times 10^4$ manufactured by GL Sciences Inc.

<Measurement conditions>

Measuring device: "HLC-8220 GPC" (manufactured by Tosoh Corporation)
Analytical column: "TSKgel GMHXL" + "TSKgel G3000HXL" (manufactured by Tosoh Corporation)

[Solid content concentration]

First, 10.0 g of sodium sulfate, which had been dried to a constant weight in a desiccator, was weighed into a 30 mL polypropylene container (with an inner diameter of 40 mm and a height of 30 mm), and 1.0 g of the sample was added and mixed with the sodium sulfate to obtain a mixture. Then, the mixture was weighed, maintained at 105°C for 2 hours to remove volatile components, and left in a desiccator for 15 minutes. The mass of the mixture after removal of the volatile components was measured. Moreover, a solid content of the sample after removal of the volatile components was calculated by subtracting the mass of the sodium sulfate from the mass of the mixture after removal of the volatile components. Finally, the solid content was divided by the mass of the sample before removal of the volatile components, yielding a solid content concentration (%).

[Average particle size of pigment-containing water-insoluble polymer particles and pigment-free water-insoluble polymer particles]

The cumulant average particle size measured using a laser particle analysis system "ELS-8000" (cumulant analysis) manufactured by Otsuka Electronics Co., Ltd. was defined as the average particle size of the pigment-containing polymer particles or the pigment-free polymer particles. The measurement conditions were as follows: the temperature was 25°C; the angle between the incident light and the detector was 90°; and the cumulative number was 100. The refractive index (1.333) of water was input as the refractive index of a dispersion medium. The measurement concentration was $5 \times 10^{-3}$%.

Production Examples 1-1 to 1-2 (production of polyester resins P-1 to P-2)

The raw material monomers (alcohol components and carboxylic acid components), the esterification catalyst, and the esterification co-catalyst shown in Table 1 were blended in the respective amounts for polyester resins P-1 and P-2 shown in Table 1. The mixture was placed in a 10 L four-necked flask equipped with a thermometer, a stirrer, a falling film condenser, and a nitrogen inlet tube. The mixture was then allowed to react at 210°C for 10 hours in a mantle heater in a nitrogen atmosphere. Subsequently, the mixture was allowed to further react at - 8.3 kPa (G) until the softening point reached the temperature shown in Table 1. Thus, the polyester resins P-1 and P-2 were obtained. Table 1 shows the physical properties of each of the polyester resins.

[TABLE 1]

| Production Example | | | 1-1 | | 1-2 | |
|---|---|---|---|---|---|---|
| Type of polyester resin | | | P-1 | | P-2 | |
| Raw material monomer | | | g | parts by mole *1 | g | parts by mole *1 |
| | Alcohol component | BPA-PO *2 | 3718 | 100 | 5740 | 100 |
| | Carboxylic acid component | Terephthalic acid | - | - | 1633 | 60 |
| | | Fumaric acid | 1282 | 104 | 571 | 30 |
| | | Trimellitic anhydride | - | - | 378 | 12 |
| Esterification catalyst | Tin(II) 2-ethylhexanoate [g] | | 25 | | 40 | |
| Esterification co-catalyst | 3,4,5-trihydroxybenzoic acid [g] | | 0.25 | | - | |
| Physical properties of polyester resin | Softening point [°C] | | 100.9 | | 122.0 | |
| | Glass transition temperature [°C] | | 58.5 | | 72.0 | |
| | Acid value [mgKOH/g] | | 22.4 | | 31.0 | |
| | Weight average molecular weight | | 13700 | | 20700 | |

*1) Parts by mole calculated given that the total amount of alcohol component is set to 100 parts by mole *2) Polyoxypropylene(2.2)-2,2-bis(4-hydroxyphenyl)propane

Production Example 2-1 (production of aqueous dispersion D-1 of pigment-containing polyester resin particles)

(1) Pigment dispersion process

In a 2 L container, 66.7 g of the polyester resin P-1 (pigment dispersing polymer) was dissolved in 156.4 g of methyl ethyl ketone (referred to as "MEK" below), and then 5.36 g of a 5N sodium hydroxide aqueous solution (neutralizer) and 430.0 g of ion-exchanged water were added so that the degree of neutralization by the sodium hydroxide was adjusted to 85 mol% with respect to the acid value of polyester resin P-1. This solution was stirred and mixed using a dispersion blade at 2,000 r/min for 15 minutes at a temperature of 10°C to 15°C.

Next, 100.0 g of a magenta pigment was added to the solution and stirred and mixed using a dispersion blade at 7,000 r/min for 2 hours at a temperature of 10°C to 15°C. The resulting preliminary dispersion was filtered through a 150 mesh filter and diluted with 36.1 g of ion-exchanged water. Subsequently, using Microfluidizer "M-110EH-30XP " (high-pressure homogenizer, manufactured by Microfluidics), the preliminary dispersion was dispersed at 150 MPa for 15 passes, thereby preparing a dispersion of pigment-containing polyester resin particles.

(2) Concentration process

The entire amount of the dispersion of the pigment-containing polyester resin particles was placed in a 2 L eggplant flask, and ion-exchanged water was added so that the solid content concentration was 16.0%. Using a rotary distillation apparatus "Rotary Evaporator N-1000S" (manufactured by TOKYO RIKAKIKAI CO., LTD.), the dispersion was held at a rotation speed of 50 r/min and a pressure of 0.09 MPa (abs) for 3 hours in a warm bath at 32°C to remove the organic solvent. Moreover, the warm bath was adjusted to 62°C, the pressure was reduced to 0.07 MPa (abs), and the dispersion was concentrated to a solid content concentration of 25.0% to obtain a concentrate.

The concentrate was placed in a 500 mL angle rotor and centrifuged at 3,660 r/min for 20 minutes using a high-speed refrigerated centrifuge "himac CR22G" (manufactured by Hitachi Koki Co., Ltd., set temperature 20°C). The liquid layer was then filtered out with a membrane filter "Minisart" having a pore size of 5 $\mu$m (manufactured by Sartorius Ltd.), resulting in an aqueous dispersion 1 of the pigment-containing polyester resin particles.

Next, ion-exchanged water was added so that the solid content concentration of the aqueous dispersion 1 was 22.0%. Further, 0.76 g of "Proxel (registered trademark) LV (S)" (preservative, active ingredient 20%, manufactured by Lonza Japan Ltd.) was added and stirred at 70°C for 2 hours. After cooling to 25°C, the aqueous dispersion 1 was filtered through the 5 pm pore size filter, and ion-exchanged water was further added, thus producing an aqueous dispersion D-1 of the pigment-containing polyester resin particles (solid content concentration: 22.0%). The average particle size of the pigment-containing polyester resin particles in the aqueous dispersion D-1 was 130 nm.

Production Example 3-1 (production of aqueous dispersion d-1 of pigment-free polyester resin particles)

A four-necked flask equipped with a nitrogen inlet tube, a reflux condenser, a stirrer, and a thermocouple was charged with the polyester resin P-2 as a fixing aid polymer and methyl ethyl ketone (MEK) as an organic solvent according to the composition shown in Table 2, and the polyester resin P-2 was dissolved in the MEK at 25°C.

Next, a 5N sodium hydroxide aqueous solution (neutralizer) was added according to the composition shown in Table 2 and ion-exchanged water was added under stirring, thereby preparing a dispersion of pigment-free polyester resin particles.

The resulting dispersion was stirred in the four-necked flask under reduced pressure while the temperature was kept at 60°C, so that the MEK was distilled off. After cooling to room temperature, ion-exchanged water was added, and the dispersion was filtered through a 200-mesh sieve, thus producing an aqueous dispersion d-1 of the pigment-free polyester resin particles (solid content concentration: 40.0%). The average particle size of the pigment-free polyester resin particles in the aqueous dispersion d-1 was 115 nm.

[TABLE 2]

| Production Example | | 3-1 |
|---|---|---|
| Type of aqueous dispersion of pigment-free polyester resin particle | | d-1 |
| Polyester resin | Type | P-2 |
| | Amount added [g] | 200 |
| Methyl ethyl ketone [g] | | 200 |
| 5N sodium hydroxide aqueous solution [g] | | 13.1 |
| Ion-exchanged water [g] | | 457 |
| Average particle size [nm] | | 115 |

Ink Production Example 1

The components of water-based ink were mixed according to the composition shown in Table 3. The resulting mixture was filtered through a membrane filter "Minisart" having a pore size of 1.2 $\mu$m (manufactured by Sartorius Ltd.). Thus, water-based ink X1 was produced The organic solvent, the surfactant, and the pH adjuster shown in Table 3 are as follows.

[Organic solvents]

· BDG: diethylene glycol monobutyl ether (reagent, manufactured by FUJIFILM Wako Pure Chemical Corporation)
· PG: propylene glycol (reagent, manufactured by FUJIFILM Wako Pure Chemical Corporation)

[Surfactants]

· KF6011: alkylene glycol modified polydimethylsiloxane (trade name "KF-6011," nonionic surfactant, manufactured by Shin-Etsu Chemical Co., Ltd.)

[pH adjuster]

· MDEA: N-methyldiethanolamine (reagent, manufactured by FUJIFILM Wako Pure Chemical Corporation)

[TABLE 3]

| Ink Production Example | | | 1 |
|---|---|---|---|
| Type of water-based ink | | | X1 |
| Composition of water-based ink *1 | Type of aqueous dispersion of pigment-containing polymer particle | D-1 | 30.3 |
| | Type of aqueous dispersion of pigment-free polymer particle | d-1 | 12.5 |
| | Organic solvent | BDG | 5 |
| | | PG | 35 |
| | Surfactant | KF6011 | 0.5 |
| | pH adjuster | MDEA | 0.3 |
| | Ion-exchanged water | | 16.4 |
| *1) Blending amount (%) with respect to the total amount of water-based ink | | | |

Examples A1 to A8, B1 to B6, C1 to C6, D1 to D6 and Comparative Examples 1 to 4

Cleaning compositions were prepared by mixing their components at 45°C according to the composition shown in Tables 4 to 7 and then cooling the mixtures to 35°C. Each of the cleaning compositions was evaluated as described below. Tables 4 to 7 show the evaluation results.

The components shown in Tables 4 to 7 are as follows.

[Solvent (A)]

· Propylene carbonate (dipole moment: 5.64 D): reagent, manufactured by FUJIFILM Wako Pure Chemical Corporation
· Ethylene carbonate (dipole moment: 5.41 D): reagent, manufactured by FUJIFILM Wako Pure Chemical Corporation

[Solvent (B)]

(Solvent (B1))

· Polyoxyethylene phenyl ether (average number of moles of EO added: 2.0): manufactured by NIPPON NYUKAZAI CO., LTD.
· Polyoxyethylene phenyl ether (average number of moles of EO added: 2.3): manufactured by NIPPON NYUKAZAI CO., LTD.
· Polyoxyethylene phenyl ether (average number of moles of EO added: 3.0): "BLAUNON PH-3" manufactured by AOKI OIL INDUSTRIAL CO., LTD.
· Polyoxyethylene phenyl ether (average number of moles of EO added: 4.0): "BLAUNON PH-4" manufactured by AOKI OIL INDUSTRIAL CO., LTD.
· Polyoxyethylene phenyl ether (average number of moles of EO added: 5.0): "BLAUNON PH-5" manufactured by AOKI OIL INDUSTRIAL CO., LTD.
· Polyoxyethylene phenyl ether (average number of moles of EO added: 5.5): manufactured by NIPPON NYUKAZAI CO., LTD.
· Polyoxyethylene benzyl ether (average number of moles of EO added: 2.0): reagent, manufactured by Tokyo Chemical Industry Co., Ltd.
· Ethylene glycol (dipole moment: 2.43 D): reagent, manufactured by FUJIFILM Wako Pure Chemical Corporation
· Diethylene glycol (dipole moment: 1.66 D): reagent, manufactured by FUJIFILM Wako Pure Chemical Corporation

(Other solvents)

· Gamma-butyrolactone (dipole moment: 4.69 D): reagent, manufactured by FUJIFILM Wako Pure Chemical Corporation

<Cleaning performance>

(Application of print dots)

Using a dispenser printer, the water-based ink X1 produced in Ink Production Example 1 was applied drop by drop (ink droplet volume: 0.5 nL), spaced 5 mm apart, on a glass petri dish to form a grid-like printed image with print dots arranged in 5 rows and 5 columns. The dispenser printer was a piezo jet dispenser "PICO Pplse Valve SD" (manufactured by Nordson EFD), and the fluid body assembly was "FLUID ASSY Pµlse MST 3.0S F0 E05" (opening 50 µm, ball size 3.0S). The dispenser was moved using "PRO4" manufactured by Nordson Corporation.

(Cleaning test)

Next, 2 g of each of the cleaning compositions in Examples and Comparative Examples was added to the grid-like printed image on the petri dish, which was allowed to stand at room temperature for 5 minutes. This petri dish was shaken at 100 rpm for 60 seconds in a shaker, and then the cleaning composition was removed from the dish by tilting it at 120 degrees. Subsequently, 2 g of ion-exchanged water was added to the dish and left at room temperature for 1 minute. This petri dish was shaken at 100 rpm for 60 seconds in a shaker, and then the ion-exchanged water was removed from the dish by tilting it at 120 degrees.

(Evaluation of cleaning performance)

Twenty-five print dots in the grid-like printed image were observed and a score of 0 to 4 was assigned to each dot based on the observation, where 4 indicates that the print dot was completely removed, 3 indicates that a thin transparent film remained, 2 indicates that a thin colored film remained, 1 indicates that some part of the print dot was removed, but the other part of the print dot still remained, and 0 indicates that no visible change was found in the print dot. The total of the individual scores was calculated and rated on a scale of 100 for the cleaning performance of each of the cleaning compositions (i.e., a total score P in cleaning performance). When the total score P is 80 or more, the cleaning composition is considered to have excellent cleaning performance.

<Compatibility with components>

About 0.08 g (mass: $M_0$) of a resin component, O-ring "BS007 Viton 5/32 inch" (material: fluorocarbon elastomer) (available from RS Components KK), was weighed out. The resin component was then immersed in each of the cleaning compositions in Examples and Comparative Examples and stored at 60°C for 1 month. Next, the resin component was taken out and immersed in 50 g of ion-exchanged water at room temperature for 1 hour. Subsequently, the resin component was taken out, dried in an environment with a temperature of 60°C and a relative humidity of 10% or less overnight, and further cooled in an environment with room temperature and a relative humidity of 50 ± 10% for 1 hour. The mass ($M_1$) of the resulting resin component was measured. The swelling rate was calculated by the following formula using the mass ($M_0$) and the mass ($M_1$) thus obtained. When the swelling rate is less than 20%, the cleaning composition is considered to have excellent compatibility with components.

$$\text{Swelling rate (\%)} = [(M_1 - M_0)/M_0] \times 100$$

<Ejection recovery>

(Continuous printing test before cleaning)

In an environment with a temperature of 25 ± 1°C and a relative humidity of 10 ± 5%, the water-based ink X1 produced in Ink Production Example 1 was filled into a printing evaluation device "OnePass JET" (manufactured by Tritek Co., Ltd.) equipped with an inkjet head "KJ4B-QA06NTB" (manufactured by KYOCERA Corporation).

The printing conditions were set as follows: head voltage 26 V, frequency 30 kHz, optimal ejection volume 7 pL, head temperature 32°C, pre-ejection flushing count 200, and negative pressure - 4.0 kPa.

Next, printing was performed continuously for 3 hours without maintenance under the above printing conditions. Then, a nozzle check pattern was printed, and the number of nozzles causing ejection deviation or clogging (i.e., the number of nozzle defects before cleaning $N_0$) was confirmed. The occurrence of ejection deviation was determined when an ink droplet landed 50 pm or more away from the predetermined landing position.

(Cleaning test)

Next, 50 mL of each of the cleaning compositions in Examples and Comparative Examples was injected into the inkjet head to fill it and allowed to overflow from the nozzle, thereby cleaning the inkjet head as the cleaning composition flowed through it. Then, the ink injection port was sealed with a plug so that the cleaning composition was retained in the inkjet head, which was allowed to stand for 5 minutes. Thereafter, 50 mL of the same cleaning composition as that retained in the inkjet head was further injected into the inkjet head to fill it and allowed to overflow from the nozzle, thereby cleaning the inkjet head as the cleaning composition flowed through it. Finally, the inkjet head was cleaned by running 1 L of ion-exchanged water into the inkjet head and out of the nozzle.

(Printing test after cleaning)

In an environment with a temperature of 25 $\pm$ 1°C and a relative humidity of 10 $\pm$ 5%, the water-based ink X1 produced in Ink Production Example 1 was filled into a printing evaluation device "OnePass JET" (manufactured by Tritek Co., Ltd.) equipped with an inkjet head "KJ4B-QA06NTB" (manufactured by KYOCERA Corporation).
The printing conditions were set as follows: head voltage 26 V, frequency 30 kHz, optimal ejection volume 7 pL, head temperature 32°C, pre-ejection flushing count 200, and negative pressure - 4.0 kPa.
Next, a nozzle check pattern was printed under the above printing conditions, and the number of nozzles causing ejection deviation or clogging (i.e., the number of nozzle defects after cleaning $N_1$) was confirmed. The occurrence of ejection deviation was determined when an ink droplet landed 50 $\mu$m or more away from the predetermined landing position.

(Nozzle recovery rate)

The nozzle recovery rate was calculated by the following formula using the number of nozzle defects before cleaning $N_0$ and the number of nozzle defects after cleaning $N_1$. The ejection recovery is considered good when the nozzle recovery rate is 90% or more. The ejection recovery is considered particularly good when the nozzle recovery rate is 95% or more.

$$\text{Nozzle recovery rate }(\%) = [(N_0 - N_1)/N_0] \times 100$$

[TABLE 4]

| | | | Example | | | | | | | | Comparative Example | |
|---|---|---|---|---|---|---|---|---|---|---|---|---|
| | | | A1 | A2 | A3 | A4 | A5 | A6 | A7 | A8 | 1 | 2 |
| Composition of cleaning composition (%) | Solvent (A) | Propylene carbonate | 18.0 | 21.0 | 24.0 | 30.0 | 36.0 | 42.0 | 20.0 | 0.0 | 48.0 | 0.0 |
| | | Ethylene carbonate | 0.0 | 4.4 | 9.9 | 12.4 | 14.9 | 17.4 | 0.0 | 20.0 | 19.8 | 0.0 |
| | Solvent (B) | Solvent (B1) | Polyoxyethylene phenyl ether (average number of moles of EO added: 5.5) | 2.0 | 4.6 | 6.1 | 7.6 | 9.1 | 10.6 | 0.0 | 0.0 | 12.2 | 0.0 |
| | Other solvent | Gamma-butyrolactone | 0.0 | 0.0 | 0.0 | 0.0 | 0.0 | 0.0 | 0.0 | 0.0 | 0.0 | 20.0 |
| | Water | | 80.0 | 70.0 | 60.0 | 50.0 | 40.0 | 30.0 | 80.0 | 80.0 | 20.0 | 80.0 |
| | Total | | 100.0 | 100.0 | 100.0 | 100.0 | 100.0 | 100.0 | 100.0 | 100.0 | 100.0 | 100.0 |
| Content of solvent (A) in cleaning composition | | | 18.0 | 25.4 | 33.9 | 42.4 | 50.9 | 59.4 | 20.0 | 20.0 | 67.8 | 0.0 |
| Mass ratio [ethylene carbonate/propylene carbonate] in cleaning composition | | | - | 0.21 | 0.41 | 0.41 | 0.41 | 0.41 | - | - | 0.41 | - |
| Mass ratio [solvent (A)/water] in cleaning composition | | | 0.23 | 0.36 | 0.57 | 0.85 | 1.27 | 1.98 | 0.25 | 0.25 | 3.39 | 0.00 |
| Mass ratio [solvent (B)/solvent (A)] in cleaning composition | | | 0.11 | 0.18 | 0.18 | 0.18 | 0.18 | 0.18 | - | - | 0.18 | - |
| Evaluation | Cleaning performance (total score P in cleaning performance) | | 100 | 100 | 100 | 100 | 96 | 92 | 84 | 80 | 11 | 21 |
| | Compatibility with component (swelling rate (%)) | | 2.2 | 4.8 | 7.2 | 11.0 | 13.0 | 16.0 | 3.7 | 4.0 | 35.0 | 10.0 |
| | Ejection recovery | Number of nozzle defect before cleaning ($N_0$) | 111 | 108 | 112 | 102 | 92 | 121 | 114 | 124 | 111 | 108 |
| | | Number of nozzle defect after cleaning ($N_1$) | 0 | 2 | 2 | 3 | 3 | 4 | 10 | 12 | 105 | 73 |
| | | Nozzle recovery rate (%) | 100 | 98 | 98 | 97 | 97 | 97 | 91 | 90 | 5 | 32 |

[TABLE 5]

| | | | | Example | | | | | | |
|---|---|---|---|---|---|---|---|---|---|---|
| | | | | B1 | B2 | B3 | B4 | B5 | B6 | A1 |
| Composition of cleaning composition (%) | Solvent (A) | Propylene carbonate | | 18.0 | 18.0 | 18.0 | 18.0 | 18.0 | 18.0 | 18.0 |
| | Solvent (B) | Solvent (B1) | Polyoxyethylene benzyl ether (average number of moles of EO added: 2.0) | 2.0 | 0.0 | 0.0 | 0.0 | 0.0 | 0.0 | 0.0 |
| | | | Polyoxyethylene phenyl ether (average number of moles of EO added: 2.0) | 0.0 | 2.0 | 0.0 | 0.0 | 0.0 | 0.0 | 0.0 |
| | | | Polyoxyethylene phenyl ether (average number of moles of EO added: 2.3) | 0.0 | 0.0 | 2.0 | 0.0 | 0.0 | 0.0 | 0.0 |
| | | | Polyoxyethylene phenyl ether (average number of moles of EO added: 3.0) | 0.0 | 0.0 | 0.0 | 2.0 | 0.0 | 0.0 | 0.0 |
| | | | Polyoxyethylene phenyl ether (average number of moles of EO added: 4.0) | 0.0 | 0.0 | 0.0 | 0.0 | 2.0 | 0.0 | 0.0 |
| | | | Polyoxyethylene phenyl ether (average number of moles of EO added: 5.0) | 0.0 | 0.0 | 0.0 | 0.0 | 0.0 | 2.0 | 0.0 |
| | | | Polyoxyethylene phenyl ether (average number of moles of EO added: 5.5) | 0.0 | 0.0 | 0.0 | 0.0 | 0.0 | 0.0 | 2.0 |
| | Water | | | 80.0 | 80.0 | 80.0 | 80.0 | 80.0 | 80.0 | 80.0 |
| | Total | | | 100.0 | 100.0 | 100.0 | 100.0 | 100.0 | 100.0 | 100.0 |
| Content of solvent (A) in cleaning composition | | | | 18.0 | 18.0 | 18.0 | 18.0 | 18.0 | 18.0 | 18.0 |
| Mass ratio [solvent (A)/water] in cleaning composition | | | | 0.23 | 0.23 | 0.23 | 0.23 | 0.23 | 0.23 | 0.23 |
| Mass ratio [solvent (B)/solvent (A)] in cleaning composition | | | | 0.11 | 0.11 | 0.11 | 0.11 | 0.11 | 0.11 | 0.11 |

(continued)

| Evaluation | | | Example | | | | | | |
|---|---|---|---|---|---|---|---|---|---|
| | | | B1 | B2 | B3 | B4 | B5 | B6 | A1 |
| Evaluation | Cleaning performance (total score P in cleaning performance) | | 100 | 96 | 98 | 100 | 100 | 100 | 100 |
| | Compatibility with component (swelling rate (%)) | | 5.1 | 9.3 | 7.5 | 5.5 | 4.3 | 3.3 | 2.2 |
| | Ejection recovery | Number of nozzle defect before cleaning ($N_0$) | 121 | 111 | 130 | 138 | 121 | 131 | 111 |
| | | Number of nozzle defect after cleaning ($N_1$) | 2 | 6 | 5 | 3 | 2 | 1 | 0 |
| | | Nozzle recovery rate (%) | 98 | 95 | 96 | 98 | 98 | 99 | 100 |

[TABLE 6]

| | | | Example | | | | | | Comparative Example | |
|---|---|---|---|---|---|---|---|---|---|---|
| | | | C1 | C2 | C3 | C4 | C5 | C6 | 3 | 4 |
| Composition of cleaning composition (%) | Solvent (A) | Propylene carbonate | 21.0 | 18.0 | 15.0 | 12.0 | 9.0 | 35.0 | 24.0 | 40.0 |
| | | Ethylene carbonate | 38.4 | 32.9 | 27.4 | 21.9 | 16.4 | 0.0 | 43.8 | 40.0 |
| | Solvent (B) | Solvent (B1) Ethylene glycol | 10.6 | 9.1 | 7.6 | 6.1 | 4.6 | 20.0 | 12.2 | 20.0 |
| | Water | | 30.0 | 40.0 | 50.0 | 60.0 | 70.0 | 45.0 | 20.0 | 0.0 |
| | Total | | 100.0 | 100.0 | 100.0 | 100.0 | 100.0 | 100.0 | 100.0 | 100.0 |
| Content of solvent (A) in cleaning composition | | | 59.4 | 50.9 | 42.4 | 33.9 | 25.4 | 35.0 | 67.8 | 80.0 |
| Mass ratio [ethylene carbonate/propylene carbonate] in cleaning composition | | | 1.8 | 1.8 | 1.8 | 1.8 | 1.8 | - | 1.8 | 1.0 |
| Mass ratio [solvent (A)/water] in cleaning composition | | | 1.98 | 1.27 | 0.85 | 0.57 | 0.36 | 0.78 | 3.39 | - |
| Mass ratio [solvent (B)/solvent (A)] in cleaning composition | | | 0.18 | 0.18 | 0.18 | 0.18 | 0.18 | 0.57 | 0.18 | 0.25 |
| Evaluation | Cleaning performance (total score P in cleaning performance) | | 87 | 86 | 85 | 84 | 82 | 81 | 9 | 11 |
| | Compatibility with component (swelling rate (%)) | | 17.0 | 14.0 | 11.0 | 8.6 | 5.3 | 12.0 | 83.0 | 121.0 |
| | Ejection recovery | Number of nozzle defect before cleaning ($N_0$) | 101 | 111 | 99 | 104 | 121 | 135 | 117 | 104 |
| | | Number of nozzle defect after cleaning ($N_1$) | 6 | 7 | 8 | 9 | 12 | 14 | 104 | 98 |
| | | Nozzle recovery rate (%) | 94 | 94 | 92 | 91 | 90 | 90 | 11 | 6 |

24

[TABLE 7]

| | | | | Example | | | | | |
|---|---|---|---|---|---|---|---|---|---|
| | | | | D1 | D2 | D3 | D4 | D5 | D6 |
| Composition of cleaning composition (%) | Solvent (A) | Propylene carbonate | | 15.0 | 20.0 | 25.0 | 30.0 | 35.0 | 35.0 |
| | | Ethylene carbonate | | 10.4 | 13.9 | 17.4 | 20.9 | 24.4 | 0.0 |
| | Solvent (B) | Solvent (B1) | Diethylene glycol | 4.6 | 6.1 | 7.6 | 9.1 | 10.6 | 35.0 |
| | Water | | | 70.0 | 60.0 | 50.0 | 40.0 | 30.0 | 30.0 |
| | Total | | | 100.0 | 100.0 | 100.0 | 100.0 | 100.0 | 100.0 |
| Content of solvent (A) in cleaning composition | | | | 25.4 | 33.9 | 42.4 | 50.9 | 59.4 | 35.0 |
| Mass ratio [ethylene carbonate/propylene carbonate] in cleaning composition | | | | 0.69 | 0.70 | 0.70 | 0.70 | 0.70 | - |
| Mass ratio [solvent (A)/water] in cleaning composition | | | | 0.36 | 0.57 | 0.85 | 1.27 | 1.98 | 1.17 |
| Mass ratio [solvent (B)/solvent (A)] in cleaning composition | | | | 0.18 | 0.18 | 0.18 | 0.18 | 0.18 | 1.00 |
| Evaluation | Cleaning performance (total score P in cleaning performance) | | | 88 | 87 | 86 | 86 | 85 | 86 |
| | Compatibility with component (swelling rate (%)) | | | 6.1 | 8.4 | 11.5 | 15.0 | 18.0 | 18.0 |
| | Ejection recovery | Number of nozzle defect before cleaning ($N_0$) | | 105 | 104 | 110 | 115 | 121 | 109 |
| | | Number of nozzle defect after cleaning ($N_1$) | | 6 | 7 | 8 | 9 | 11 | 11 |
| | | Nozzle recovery rate (%) | | 94 | 93 | 93 | 92 | 91 | 90 |

As can be seen from Tables 4 to 7, the cleaning compositions in Examples are superior in both the cleaning performance and the compatibility with components to the cleaning compositions in Comparative Examples. Moreover, the use of the cleaning compositions in Examples as cleaning agents for an inkjet head that ejects water-based ink for inkjet recording can improve the ejection recovery of the inkjet head.

**Claims**

1. An inkjet head cleaning composition comprising a solvent (A) and water,

    wherein the solvent (A) has a dipole moment of 5.0 D or more at 25°C, which is determined by a density functional theory, and
    a content of the water in the inkjet head cleaning composition is 30% by mass or more.

2. The inkjet head cleaning composition according to claim 1, wherein the solvent (A) is one or more selected from the group consisting of propylene carbonate, ethylene carbonate, and sulfolane.

3. The inkjet head cleaning composition according to claim 1 or 2, further comprising an organic solvent (B) having one or more groups selected from the group consisting of a hydroxy group and a polyoxyalkylene group.

4. The inkjet head cleaning composition according to claim 3, wherein the organic solvent (B) contains one or more solvents (B1) selected from the group consisting of ethylene glycol, diethylene glycol, polyoxyalkylene phenyl ether, and polyoxyalkylene benzyl ether.

5. The inkjet head cleaning composition according to claim 4, wherein the polyoxyalkylene group of the polyoxyalkylene phenyl ether or the polyoxyalkylene benzyl ether is a polyoxyethylene group.

6.  The inkjet head cleaning composition according to claim 4, wherein the polyoxyalkylene group of the polyoxyalkylene phenyl ether or the polyoxyalkylene benzyl ether is a polyoxyethylene group, and an average number of moles of ethylene oxide added in the polyoxyethylene group is 2 or more and 6 or less.

7.  The inkjet head cleaning composition according to any one of claims 1 to 6 for use in an inkjet head that ejects water-based ink for inkjet recording,
    wherein the water-based ink for inkjet recording contains a polymer with an acid value of 5 mgKOH/g or more and water.

8.  Use of a cleaning composition as an inkjet head cleaning agent, the cleaning composition comprising a solvent (A) and water,

    wherein the solvent (A) has a dipole moment of 5.0 D or more at 25°C, which is determined by a density functional theory, and
    a content of the water in the cleaning composition is 30% by mass or more.

9.  The use according to claim 8, wherein the solvent (A) is one or more selected from the group consisting of propylene carbonate, ethylene carbonate, and sulfolane.

10. The use according to claim 8 or 9, wherein the cleaning composition further comprises an organic solvent (B) having one or more groups selected from the group consisting of a hydroxy group and a polyoxyalkylene group.

11. The use according to any one of claims 8 to 10 in an inkjet head that ejects water-based ink for inkjet recording,
    wherein the water-based ink for inkjet recording contains a polymer with an acid value of 5 mgKOH/g or more and water.

12. A method for cleaning an inkjet head, comprising:

    using a cleaning composition containing a solvent (A) and water,
    wherein the solvent (A) has a dipole moment of 5.0D or more at 25°C, which is determined by a density functional theory, and
    a content of the water in the cleaning composition is 30% by mass or more.

13. The method according to claim 11, wherein the solvent (A) is one or more selected from the group consisting of propylene carbonate, ethylene carbonate, and sulfolane.

14. The method according to claim 11 or 12, using the cleaning composition that further comprises an organic solvent (B) having one or more groups selected from the group consisting of a hydroxy group and a polyoxyalkylene group.

15. The method according to any one of claims 12 to 14, wherein the inkjet head ejects water-based ink for inkjet recording, and
    the water-based ink for inkjet recording contains a pigment, a polymer with an acid value of 5 mgKOH/g or more, and water.

## INTERNATIONAL SEARCH REPORT

| | International application No. |
|---|---|
| | **PCT/JP2024/021965** |

| | | |
|---|---|---|
| **A.** | **CLASSIFICATION OF SUBJECT MATTER** | |
| | *B41J 2/165*(2006.01)i; *C09D 9/00*(2006.01)i; *C11D 7/26*(2006.01)i; *C11D 7/50*(2006.01)i | |
| | FI:  B41J2/165 401; C11D7/50; C11D7/26; C09D9/00 | |

According to International Patent Classification (IPC) or to both national classification and IPC

| | |
|---|---|
| **B.** | **FIELDS SEARCHED** |

Minimum documentation searched (classification system followed by classification symbols)

B41J2/01-2/215; C09D9/00; C11D7/26; C11D7/50

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 2013-188992 A (RICOH COMPANY, LTD.) 26 September 2013 (2013-09-26) paragraphs [0010]-[0070] | 1-4, 7-15 |
| A | | 5-6 |
| A | JP 2021-24085 A (RICOH COMPANY, LTD.) 22 February 2021 (2021-02-22) paragraph [0059] | 1-15 |

| | | |
|---|---|---|
| ☐ Further documents are listed in the continuation of Box C. | ☑ See patent family annex. | |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 July 2024** | **30 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

27

## INTERNATIONAL SEARCH REPORT
### Information on patent family members

| International application No. |
| --- |
| **PCT/JP2024/021965** |

| Patent document<br>cited in search report | Publication date<br>(day/month/year) | Patent family member(s) | Publication date<br>(day/month/year) |
| --- | --- | --- | --- |
| JP 2013-188992 A | 26 September 2013 | (Family: none) | |
| JP 2021-24085 A | 22 February 2021 | (Family: none) | |

Form PCT/ISA/210 (patent family annex) (July 2022)

**REFERENCES CITED IN THE DESCRIPTION**

**Patent documents cited in the description**

• JP 2018104637 A